# FASCICULE DE BREVET EUROPEEN

(11) **EP 3 048 701 B1**
(45) Date de publication et mention de la délivrance du brevet: **22.08.2018**
(21) Numéro de dépôt: 15305061.2
(22) Date de dépôt: 21.01.2015
(51) Int. Cl.: H02K 1/18, H02K 5/04, H02K 5/16, H02K 5/24, H02K 7/14, H02K 15/00, H02K 17/16

(54) **Berceau pour machine électrique et système de transmission associé**
Halterung für elektrische Maschine, und entsprechendes Übertragungssystem
Cradle for electric machine and associated transmission system

(43) Date de publication de la demande: 27.07.2016
(73) Titulaire: GE Energy Power Conversion Technology Ltd, Rugby Warwickshire CV21 1BU (GB)
(72) Inventeur: Roche, Fabien, 54113 BLENOD LES TOUL (FR); Ourion, Emilie, 54220 MALZEVILLE (FR)
(74) Mandataire: Casalonga

(56) Documents cités:
- DE-A1- 1 488 040
- DE-A1- 3 506 628
- DE-A1- 4 032 666
- FR-A1- 2 318 527
- US-A- 3 114 061
- US-A- 4 079 275

## Description

La présente invention concerne un berceau pour une machine électrique, la machine électrique comportant un stator, un arbre de transmission, un rotor solidaire de l'arbre, et deux paliers, du type à fixation par bride, de soutien de l'arbre de transmission. Le berceau comprend un cadre délimitant un logement de réception d'une partie de la machine, le cadre s'étendant selon une direction verticale et comportant un bord inférieur et un bord supérieur, le bord inférieur étant destiné à être relié à un support.

La présente invention concerne également un système de transmission comprenant une telle machine électrique et un tel berceau propre à recevoir la machine.

L'invention s'applique en particulier aux machines électriques de forte puissance, telle qu'une puissance supérieure à 10 MW, de préférence supérieure à 50 MW, notamment dans les domaines du pompage de ressources naturelles, de la compression de gaz, ou encore des installations de production dans des industries chimiques, pétrochimiques et pétrolières. Pour de telles machines électriques, la vitesse de rotation du rotor est généralement supérieure à 1000 tours par minute, de préférence supérieure à 3000 tours par minute.

On connaît un berceau et une machine électrique, en particulier un moteur électrique, du type précité, et plus particulièrement un moteur asynchrone, notamment à polarité deux pôles. Le moteur électrique est supporté par le berceau, le berceau étant une pièce mécanique supportant le stator, d'une part, et comprenant des encoches de réception des paliers de soutien de l'arbre de transmission, d'autre part.

Pour les moteurs électriques de forte puissance, les niveaux vibratoires enregistrés au niveau du berceau sont généralement élevés et fragilisent le berceau et les paliers, ce qui conduit à une usure prématurée du moteur. Les fortes vibrations observées sont généralement dues à des phénomènes de résonance, la vitesse d'opération du moteur générant des forces, excitations et vibrations associées dont la fréquence correspond à la fréquence de résonance du berceau.

Le cadre du berceau comprend alors généralement des nervures de renfort verticales s'étendant selon la direction verticale entre le bord inférieur et le bord supérieur du cadre et sensiblement perpendiculairement à une direction longitudinale. Ces nervures forment une armature et servent à rigidifier la structure du berceau.

Cependant, un tel berceau n'est pas approprié pour des machines électriques de plus en plus puissantes, générant des vibrations d'amplitude de plus en plus importante. Le brevet US 3114061A divulgue l'utilisation de plaques pour le soutien du stator. Les plaques isolent donc le stator de sa base, afin d'assurer l'équilibre statique et dynamique du moteur.

Le brevet DE 4032666A1 divulgue l'utilisation d'un élément amortisseur, réalisé en matière plastique et placé au niveau des logements, afin de réduire les vibrations des paliers.

L'invention vise ainsi à proposer un berceau pour machine électrique tournante permettant d'améliorer la tenue aux vibrations mécaniques, notamment pour des vitesses de rotation du rotor entre 60% et 100% de sa vitesse nominale, et de réduire ainsi l'usure de la machine.

A cet effet, l'invention a pour objet un berceau du type précité, dans lequel le bord supérieur comprend un ou deux logements de réception, chaque logement de réception étant propre à recevoir un palier respectif et comportant une paroi de fond et deux parois latérales.

Suivant d'autres aspects avantageux de l'invention, le berceau comporte l'une ou plusieurs des caractéristiques suivantes, prise(s) isolément ou suivant toutes les combinaisons techniquement possibles :
- le berceau comprend, pour au moins un logement de réception, deux parois latérales en saillie par rapport au bord supérieur du cadre selon la direction verticale ;
- il comprend en outre au moins une chaise palier amovible et fixée dans le logement, et sur laquelle est fixé le palier, ladite chaise palier étant adaptée pour augmenter la raideur des paliers selon la direction axiale et pour démonter ou assembler le rotor dans la machine électrique selon la direction axiale sans collision avec le berceau, la chaise palier comportant en outre au moins une nervure verticale avec un bord supérieur concave apte à accueillir la bride de fixation du palier, la nervure verticale étant en appui ou fixée à la paroi de fond et s'étendant transversalement dans une direction transversale entre deux parois latérales fixées aux parois latérales du berceau ;

- le berceau comprend au moins un logement comportant une nervure verticale avec un bord supérieur concave adapté pour accueillir la bride de fixation du palier, la nervure verticale s'étendant verticalement à partir de la paroi de fond et transversalement selon une direction transversale entre les parois latérales ;
- au moins un logement comprend des nervures obliques s'étendant selon la direction longitudinale d'un côté ou de part et d'autre de la nervure verticale, et de manière oblique par rapport aux directions transversale et verticale entre la paroi de fond et les parois latérales ;
- la hauteur de la ou de chaque paroi latérale selon la direction verticale est au moins égale à un cinquième de la hauteur du cadre selon la direction verticale, de préférence au moins égale à un quart de la hauteur du cadre selon la direction verticale ;
- le cadre comporte deux flancs longitudinaux s'étendant sensiblement selon une direction longitudinale, deux flancs transversaux s'étendant sensiblement selon une direction transversale et reliés mécaniquement aux flancs longitudinaux, le cadre comportant en outre au moins un flanc additionnel agencé entre un flanc longitudinal et un flanc transversal respectif et s'étendant de manière oblique par rapport aux directions longitudinale et transversale ;
- le cadre comporte quatre flancs additionnels et est en forme d'un octogone selon une section suivant un plan perpendiculaire à la direction verticale ;
- le cadre comporte en outre des nervures de renfort verticales s'étendant selon la direction verticale entre le bord inférieur et le bord supérieur ;

L'invention a également pour objet un système de transmission comprenant une machine électrique comportant un stator, un arbre de transmission, un rotor solidaire de l'arbre, et deux paliers de soutien de l'arbre de transmission du type à fixation par bride.

Le système de transmission comprend également un berceau tel que défini ci-dessus, propre à recevoir ladite machine.

L'invention sera mieux comprise à la lecture de la description détaillée qui va suivre, donnée uniquement à titre d'exemple, faite en référence aux dessins annexés sur lesquels :
- la figure 1 est une vue en perspective d'un système de transmission selon l'invention, le système de transmission comprenant une machine électrique et un berceau apte à recevoir ladite machine, la machine comportant un stator, un arbre de transmission, un rotor solidaire de l'arbre, deux paliers de soutien de l'arbre de transmission, et deux chaises palier fixées au berceau,
- la figure 2 est une vue en coupe selon le plan II de la figure 1,
- la figure 3 est une vue en perspective du berceau et des chaises palier de la figure 1,
- la figure 4 est une vue en perspective du berceau selon un deuxième mode de réalisation de l'invention,
- la figure 5 est un ensemble de courbes représentant l'amplitude des vibrations au niveau d'un palier en fonction de la vitesse de rotation de l'arbre de transmission pour un berceau de l'état de la technique, et
- la figure 6 est un ensemble de courbes représentant l'amplitude des vibrations au niveau d'un palier en fonction de la vitesse de rotation de l'arbre de transmission pour le berceau de la figure 3, ou de la figure 4.

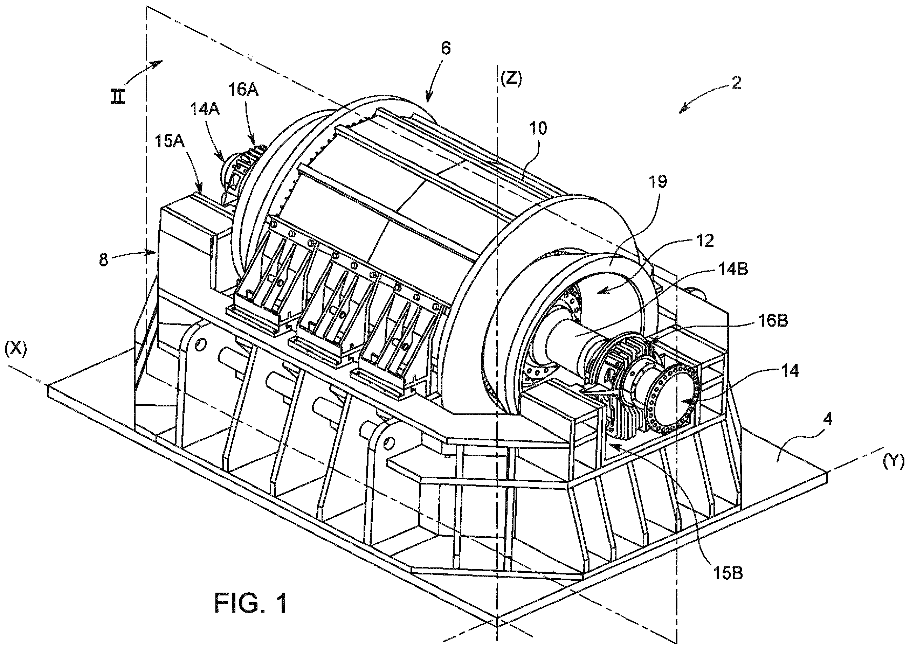

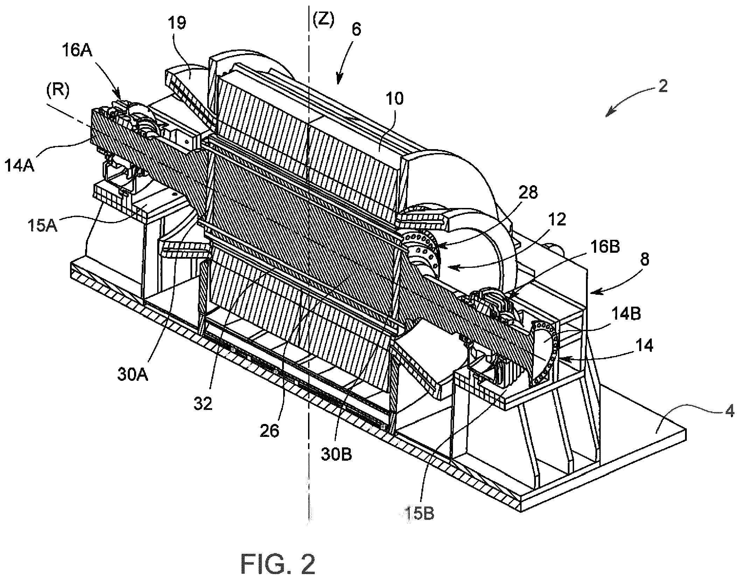

Le système de transmission 2, illustré sur les figures 1 et 2, est posé ou fixé sur un support plan 4. Dans la suite de la description, le terme « vertical » est défini comme étant la direction verticale par rapport au support plan 4, représentée par l'axe Z sur les dessins et le terme « horizontal » est défini comme étant parallèle au support 4. Un système d'axes X et Y est également défini sur le support 4, de sorte que l'axe X est perpendiculaire à l'axe Y.

Le système de transmission 2 s'étend sensiblement longitudinalement selon la direction X, également appelée direction longitudinale.

Le système de transmission 2 comprend une machine tournante électrique 6 et un berceau 8.

La machine électrique 6 est, par exemple, un moteur électrique couplé à un compresseur, non représenté, pour la compression de gaz en gaz liquéfié et possédant une puissance de préférence supérieure à 60MW.

Le moteur électrique 6 comprend un stator 10, un rotor 12, un arbre de transmission 14, un premier palier 16A et un deuxième palier 16B. Les paliers 16A et 16B sont du type à fixation par bride, et sont fixés sur les chaises palier 15A et 15B, elles même fixées au berceau 8.

Le stator 10 est reçu dans le berceau 8 et présente une forme tubulaire s'étendant le long d'un axe de direction parallèle à l'axe longitudinal X. Le stator 10 présente un rayon intérieur permettant de recevoir le rotor 12.

Le stator 10 comporte un ou plusieurs enroulements 19 parcourus par un courant et produisant alors un champ magnétique tournant, apte à mettre en rotation le rotor 12.

Le rotor 12 est en forme d'un cylindre, s'étendant le long d'une direction parallèle à l'axe longitudinal X, et est disposé à l'intérieur du stator 10. Le rotor 12 est en outre monté rotatif par rapport au stator 10, suivant un axe de rotation R parallèle à l'axe X. Lors du fonctionnement du moteur 6, le rotor 12 présente une vitesse de rotation autour de l'axe R.

Le rotor 12 comprend une masse magnétique 26 et une cage de court-circuit 28. La masse magnétique 26 est constituée par un empilement de tôles rotoriques. La cage de court-circuit 28 comprend deux couronnes 30A et 30B de court-circuit électrique et mécanique situées en regard l'une de l'autre, de part et d'autre du rotor 12 et selon l'axe R. La cage de court-circuit 28 comprend en outre une pluralité de barres conductrices 32 s'étendant longitudinalement parallèlement à l'axe R dans la partie médiane du rotor 12, et reliant électriquement les couronnes de court-circuit 30A et 30B.

L'arbre de transmission 14 est solidaire du rotor 12. Ici, il comprend deux bouts d'arbre 14A et 14B s'étendant de part et d'autre du rotor 12. Chacun des deux bouts d'arbre 14A et 14B possède une première extrémité et une deuxième extrémité. La première extrémité du bout d'arbre 14A, respectivement, du bout d'arbre 14B, est fixée à la couronne de court-circuit 30A, respectivement à la couronne de court-circuit 30B.

Les deux paliers 16A et 16B sont reçus dans le berceau 8. Ils possèdent une forme tubulaire. Le premier palier 16A, respectivement le deuxième palier 16B, est propre à recevoir la deuxième extrémité du bout d'arbre 14A, respectivement à celle du bout d'arbre 14B.

Les deux paliers 16A et 16B sont par exemple des paliers à coussinet avec lubrification à l'huile. En variante, les paliers 16A, 16B sont des paliers à roulement, ou des paliers magnétiques.

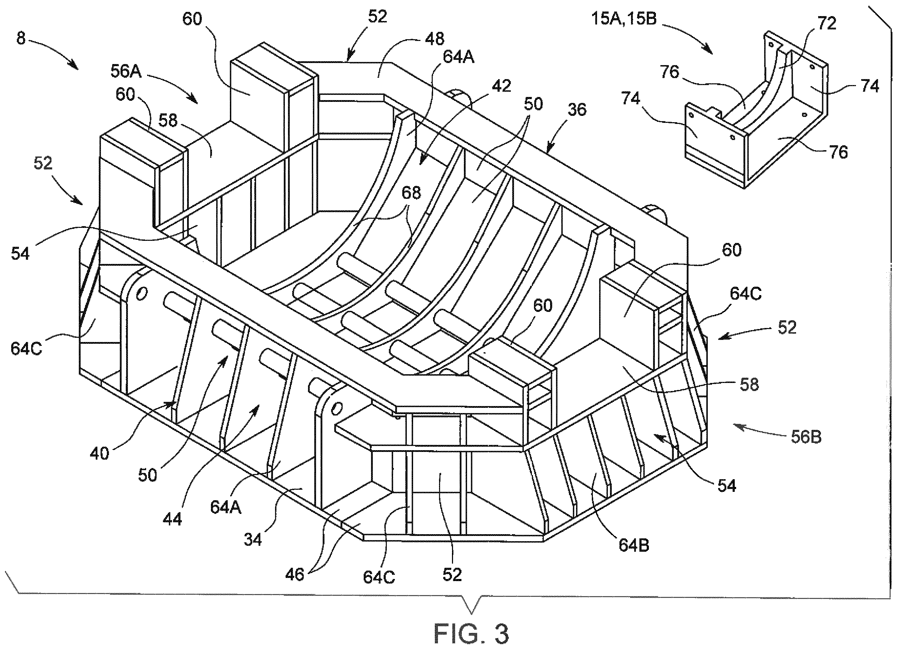

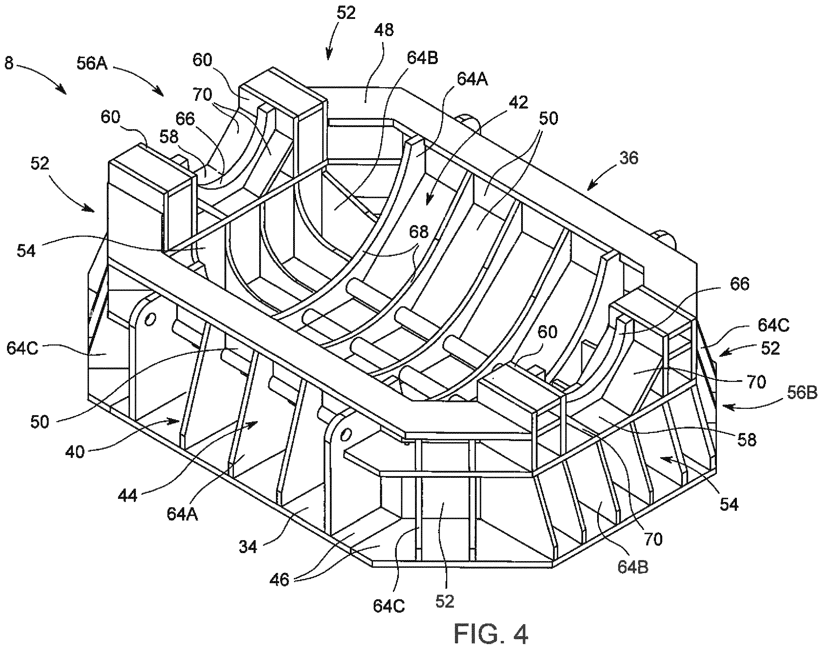

Le berceau 8 comprend un fond 34, un cadre 36 et une armature de renfort 40, comme représenté sur la figure 3 et sur la figure 4.

Le fond 34 est sensiblement horizontal, et est fixé ou posé sur le support 4. Le fond 34 possède sensiblement une forme octogonale s'étendant selon l'axe X, obtenue à partir d'un rectangle dont les quatre angles sont biseautés.

Le cadre 36 délimite une cavité 42 de réception du stator 10. Le cadre 36 comprend un ensemble de flancs 44, un bord inférieur 46 et un bord supérieur 48.

L'ensemble de flancs 44 s'étend verticalement selon une direction parallèle à l'axe vertical Z entre le bord inférieur 46 et le bord supérieur 48. L'ensemble de flancs 44 comprend deux flancs longitudinaux 50 s'étendant dans une direction parallèle à l'axe X, quatre flancs additionnels 52 s'étendant de manière oblique par rapport aux axes X et Y et deux flancs transversaux 54 s'étendant dans une direction parallèle à l'axe Y. Chaque flanc additionnel 52 relie mécaniquement l'un des flancs longitudinaux 50 et l'un des flancs transversaux 54 correspondant. Selon une section suivant un plan horizontal, l'ensemble des flancs 44 est en forme d'octogone.

La cavité de réception 42 débouche verticalement hors du cadre 36 uniquement par rapport à son bord supérieur 48.

Le bord supérieur 48 comporte deux logements de réception 56A et 56B, aptes à recevoir chacun un palier 16A, 16B correspondant. En particulier, chacun des deux logements 56A et 56B comporte une paroi de fond 58 et deux parois latérales 60. Les parois de fond 58 sont sensiblement horizontales et s'étendent suivant une direction parallèle à l'axe Y. Les parois latérales 60 sont sensiblement verticales et s'étendent suivant une direction parallèle à l'axe Z.

Chacune des quatre parois latérales 60 correspondantes d'un des deux logements de réception 56A et 56B peut faire saillie verticalement par rapport au bord supérieur 48. Dans l'exemple de la figure 3, chaque paroi latérale 60 fait saillie verticalement par rapport au bord supérieur 48.

La hauteur de la ou de chaque paroi latérale 60, selon la direction verticale Z, est supérieure ou égale à un cinquième de la hauteur du cadre 36 selon la direction verticale Z, de préférence supérieure ou égale à un quart de ladite hauteur du cadre 36.

L'armature 40 comprend une pluralité de nervures de renfort verticales 64 s'étendant selon la direction verticale Z entre le bord inférieur 46 et le bord supérieur 48.

La pluralité de nervures de renfort verticales 64 comprend des premières nervures verticales 64A, des deuxièmes nervures verticales 64B et des troisièmes nervures verticales 64C. Les premières nervures 64A s'étendent transversalement selon une direction parallèle à l'axe Y de part et d'autre des flancs longitudinaux 50 et verticalement à partir du fond 34. Les premières nervures verticales 64A comportent un bord supérieur 68 concave par rapport au support horizontal 4, ce bord supérieur 68 étant destiné à être en appui, ou former une étanchéité, contre le stator 10. Les nervures verticales 64A forment ainsi une cavité au plus proche du stator permettant de l'accueillir une fois la machine 6 assemblée, et permettant de rigidifier le berceau 8 selon la direction parallèle à l'axe Y. Les deuxièmes nervures 64B s'étendent chacune verticalement entre le bord inférieur 46 et une paroi de fond 58 correspondante et contre un flanc transversal 54 correspondant. En variante, comme représenté à la figure 4, les deuxièmes nervures 64B se prolongent entre un flanc transversal 54 et la plus proche première nervure verticale 64A, ceci afin de rigidifier le berceau 8 selon une direction parallèle à l'axe X. Les troisièmes nervures 64C s'étendent verticalement entre le bord inférieur 46 et le bord supérieur 48 et contre chacun des flancs obliques additionnels 52 correspondants.

Le fonctionnement du moteur électrique 6 est connu en soi, et dans la suite sera uniquement décrit le comportement mécanique du berceau 8 lorsque le moteur 6 est en fonctionnement.

L'homme du métier comprendra l'intérêt de l'invention qui est d'alléger le berceau 8, de réduire l'amplitude des vibrations du berceau 8 et des paliers 16A et 16B, et de faciliter la maintenance du moteur électrique 6 par un démontage rendu plus facile du rotor 12.

L'agencement de l'armature 40, en particulier des nervures de renfort verticales 64 et la forme octogonale du berceau 8 permettent d'alléger le berceau 8 par rapport au berceau selon l'état de la technique de forme sensiblement parallélépipédique. En effet, les angles biseautés du berceau selon l'invention permettent un allégement du berceau.

L'utilisation de paliers 16A et 16B de type à fixation par bride, comme représenté sur les figures 1 et 2, permet d'avoir une raideur des paliers plus importante dans la direction transversale parallèle à l'axe Y. En effet, les paliers du type à fixation au pied présentent une raideur transversale beaucoup plus faible que la raideur verticale, par exemple une raideur transversale équivalent à 40% seulement de la raideur verticale. Les paliers 16A et 16B de type à fixation par bride comme utilisés dans l'invention présentent une raideur transversale beaucoup plus proche de la raideur verticale, par exemple une raideur transversale équivalent à 80% de la raideur verticale.

L'homme du métier comprendra l'intérêt d'utiliser ce type de palier 16A et 16B du type à fixation par bride avec des raideurs transversales et verticales de valeur proche et homogène, évitant ainsi de dédoubler les fréquences propres en flexion du rotor dans le plan transversal et vertical. En évitant ce dédoublement des vitesses critiques à fortes vibrations de flexion du rotor 12 en rotation, on augmente la plage de vitesses de rotation confortables et sans risque du moteur électrique 6.

Pour le traitement des vibrations des paliers dans la direction axiale parallèle à l'axe X, les paliers 16A et 16B sont fixés par leur bride, qui représente une demi-circonférence, à une structure rigide et amovible, appelée chaise palier 15A, 15B. La chaise palier 15A, 15B comprend une nervure verticale 72 avec un bord supérieur concave permettant d'accueillir la bride de fixation des paliers 16A, 16B. Cette nervure est en appui sur la paroi de fond 58, ou fixée à la paroi de fond 58, et s'étend transversalement entre deux parois latérales 74 fixées aux parois latérales 60 du berceau 8. Les deux parois latérales 74 des chaises palier sont sensiblement de même dimension que les parois latérales 60, et sont fixées par vis ou boulons aux parois latérales 60. En variante, la chaise palier 15, 15B comprend une paroi de fond 76 sous la nervure verticale 72 de la chaise palier, s'étendant horizontalement entre les deux parois latérales 74 de la chaise palier, et en appui sur la paroi de fond 58 du berceau 8. La paroi de fond 76 de la chaise palier est sensiblement de même dimension que la paroi de fond 58.

Selon une autre variante, la paroi de fond 76 de la chaise palier est fixée par vis ou boulons à la paroi de fond 58. Selon encore une autre variante (non représentée), des nervures obliques s'étendent axialement de part et d'autre de la nervure verticale 72 de la chaise palier 15A, 15B et de manière oblique par rapport aux axes Y et Z entre la paroi de fond 76 et les parois latérales 74 de la chaise palier 15A, 15B.

Les chaises palier amovibles 15A, 15B sont accueillies dans leur logement de réception 56A, 56B, et sont rendues solidaires du logement de réception 56A, 56B et donc du berceau 8, par des moyens de fixation de type vis ou boulon. Ainsi, le berceau 8 et les deux logements de réception 56A et 56B permettent d'encastrer les chaises palier et d'augmenter considérablement la raideur axiale des paliers 16A et 16B par rapport à un agencement de paliers du type à fixation au pied, fixés en leur pied au berceau 8.

Sur ces moteurs électriques 6 de forte puissance et à vitesse de rotation élevée, notamment à polarité deux pôles, les forces pulsatoires radiales du stator 10 transmises dans la direction transversale au berceau 8, par l'intermédiaire du cadre 36, lieu de fixation du stator 10 au berceau 8, induisent une déformation transversale du berceau 8, qui par déformation induite, entraîne en quadrature une déformation axiale du berceau 8 au niveau des logements 56A, 56B et des paliers 16A, 16B.

L'invention propose donc de limiter les vibrations axiales des paliers 16A et 16B par une fixation encastrée des paliers dans les logements 56A, 56B, comme expliqué précédemment, mais aussi par la conception de forme octogonale du berceau 8, notamment du fond 34 et du cadre 36. L'homme du métier comprendra que les angles biseautés du berceau 8, dans la zone des flancs obliques 52 et des nervures 64C, permettent en quelque sorte de découpler les déformations entre les côtés en quadrature du berceau 8, et notamment un découplage entre les vibrations transversales induites par le stator 10 du berceau 8 et la zone en quadrature des flancs transversaux 54.

Ainsi, la forme octogonale du berceau 8 avec ses angles biseautés réduit fortement le couplage transversal-axial des vibrations transversales du stator 10 engendrant des vibrations axiales des paliers 16A et 16B, ces dernières vibrations réduisant la durée de vie des paliers.

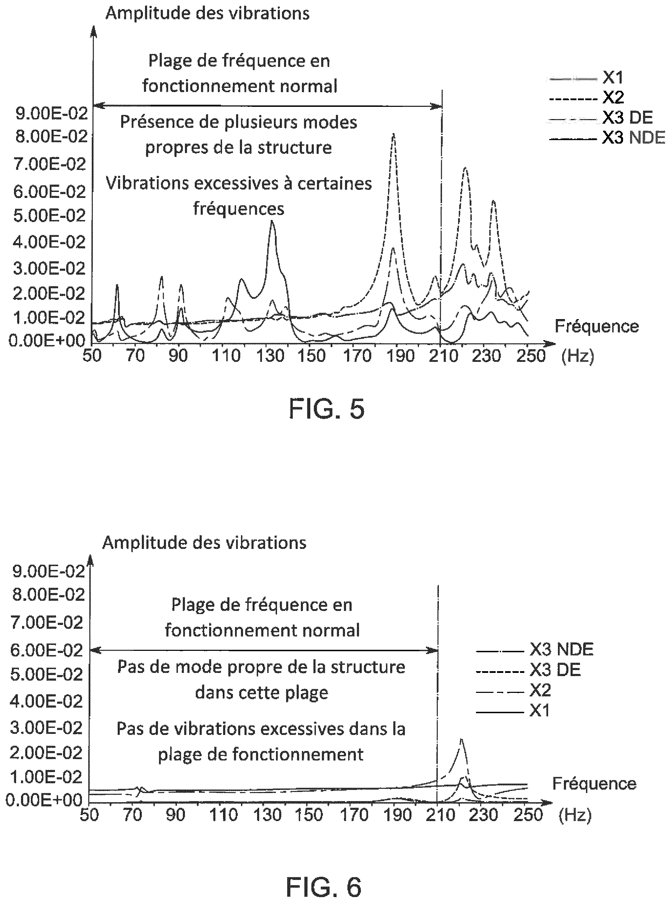

Les figures 5 et 6 présentent un ensemble de courbes qui illustrent l'intérêt du berceau 8 selon l'invention. Le berceau 8, par sa conception octogonale et ses logements 56A et 56B, permet de rigidifier axialement les paliers 16A et 16B, d'éliminer plusieurs modes propres de la structure du berceau selon l'état de la technique (figure 5), ou de décaler les modes propres de la structure du berceau vers des fréquences hors de la plage de vitesses de rotation du moteur électrique 6 en exploitation, comme représenté à la figure 6, pour un berceau 8 selon l'invention.

Ainsi, le berceau 8 selon l'invention permet de réduire l'amplitude des vibrations induites par le moteur, relevées sur le berceau 8 au niveau du palier 16A, 16B, notamment pour des vitesses de rotation du rotor inférieures à sa vitesse nominale, permettant une plus grande plage d'exploitation du moteur 6, en ce qui concerne sa vitesse de rotation, notamment si le moteur 6 est exploité à vitesse variable. Ceci est représenté à la figure 6, dans laquelle la plage de vitesses de rotation du rotor, sans amplitude de vibration excessive, est beaucoup plus étendue que celle représentée à la figure 5, améliorant le confort d'exploitation du moteur 6 selon l'invention, ainsi que sa durée de vie.

La dimension du logement de réception 56A et 56B est fixée en fonction de la dimension de la bride de fixation des paliers 16A et 16B, mais aussi en fonction du diamètre extérieur de la masse magnétique 26 du rotor 12, permettant ainsi un démontage ou une insertion du rotor 12 dans la direction axiale suivant son axe de rotation R parallèle à l'axe X, une fois les chaises paliers 15A et 15B dévissées ou déboulonnées du berceau 8, puisque les chaises palier 15A et 15B sont amovibles. La dimension du logement 56A, 56B évite toute collision avec le rotor 12 lors d'un déplacement axial du rotor 12, facilitant ainsi grandement l'assemblage du rotor 12 dans le moteur électrique 6, ou une opération de maintenance nécessitant le démontage suivant la direction axiale du rotor 12.

Certains moteurs électriques de forte puissance nécessitent le démontage par le haut de tous les équipements du moteur afin de pouvoir démonter verticalement le stator et le rotor, ce qui rend l'assemblage et plus particulièrement la maintenance et la réparation du moteur très compliquées.

Le moteur électrique 6 selon l'invention, ainsi que son berceau 8 équipé des logements 56A et 56B, facilite considérablement l'assemblage ou la maintenance du rotor 12 en permettant un mouvement axial du rotor 12 sans collision avec le berceau 8.

Selon un deuxième mode de réalisation de l'invention illustré à la figure 4, si la dimension de la bride de fixation des paliers 16A et 16B est supérieure au diamètre extérieur du rotor 12, alors les paliers ne sont plus fixés aux chaises palier 15A et 15B encastrées dans le berceau 8, mais directement fixés à une nervure verticale 66 dans le logement 56A, 56B. Cette nervure verticale 66 comporte un bord supérieur concave permettant d'accueillir la bride de fixation des paliers 16A et 16B. La nervure verticale 66 s'étend verticalement à partir de la paroi de fond 58 et transversalement selon une direction parallèle à l'axe Y entre les parois latérales 60. En variante, afin de rigidifier encore plus la nervure verticale 66 dans la direction axiale, des nervures obliques 70 peuvent être incorporées dans le logement 56A, 56B, s'étendant axialement de part et d'autre de la nervure verticale 66, et de manière oblique par rapport aux axes Y et Z entre la paroi de fond 58 et les parois latérales 60. Selon ce deuxième mode de réalisation, la raideur axiale des paliers 16A et 16B est ainsi augmentée limitant les vibrations axiales des paliers 16A et 16B, tout en permettant un montage ou un démontage du rotor 12 suivant la direction axiale sans collision avec le berceau 8.

Selon un autre mode de réalisation, le cadre 36 comporte deux flancs longitudinaux 50 s'étendant sensiblement selon une direction longitudinale X, deux flancs transversaux 54 s'étendant sensiblement selon une direction transversale Y et reliés mécaniquement aux flancs longitudinaux 50, que le cadre 36 comportant en outre au moins un flanc additionnel 52 agencé entre un flanc longitudinal 50 et un flanc transversal 54 respectif et s'étendant de manière oblique par rapport aux directions longitudinale X et transversale Y.

## Revendications

1. Berceau (8) pour machine électrique (6), la machine électrique (6) comprenant un stator (10), un arbre de transmission (14), un rotor (12) solidaire de l'arbre (14), et deux paliers (16A ; 16B) du type à fixation par bride et de soutien de l'arbre de transmission (14),
le berceau (8) comprenant un cadre (36) délimitant un logement de réception d'une partie de la machine (6), le cadre (36) s'étendant selon une direction verticale (Z) et comportant un bord inférieur (46) et un bord supérieur (48), le bord inférieur (46) étant destiné à être relié à un support (4), le bord supérieur (48) comprenant un ou deux logements de réception (56A ; 56B), chaque logement de réception (56A ; 56B) étant propre à recevoir un palier (16A ; 16B) respectif et comportant une paroi de fond (58) et deux parois latérales (60), la hauteur de la ou de chaque paroi latérale (60) selon la direction verticale (Z) est au moins égale à un cinquième de la hauteur du cadre (36) selon la direction verticale (Z), de préférence au moins égale à un quart de la hauteur du cadre (36) selon la direction verticale (Z), **caractérisé en ce que** chaque palier (16A, 16B) est lié par une fixation encastrée dans un logement de réception (56A, 56B) et le cadre (36) comporte deux flancs longitudinaux (50) s'étendant sensiblement selon une direction longitudinale (X), deux flancs transversaux (54) s'étendant sensiblement selon une direction transversale (Y) et reliés mécaniquement aux flancs longitudinaux (50), et **en ce que** le cadre (36) comporte en outre au moins un flanc additionnel (52) agencé entre un flanc longitudinal (50) et un flanc transversal (54) respectif et s'étendant de manière oblique par rapport aux directions longitudinale (X) et transversale (Y).

2. Berceau selon la revendication 1, **caractérisé en ce qu'**il comprend, pour au moins un logement de réception (56A ; 56B), deux parois latérales (60) en saillie par rapport au bord supérieur (48) du cadre (36) selon la direction verticale (Z).

3. Berceau selon l'une des revendications 1 et 2, **caractérisé en ce qu'**il comprend en outre au moins une chaise palier (15A, 15B) amovible et fixée dans le logement (56A, 56B), et sur laquelle est fixé le palier (16A, 16B), ladite chaise palier étant adaptée pour augmenter la raideur des paliers (16A, 16B) selon la direction axiale (X) et de démonter ou d'assembler le rotor (12) dans la machine électrique (6) selon la direction axiale (X) sans collision avec le berceau (8), et **en ce que** la chaise palier (15A, 15B) comporte en outre au moins une nervure verticale (72) avec un bord supérieur concave apte à accueillir la bride de fixation du palier (16A, 16B), la nervure verticale étant en appui ou fixée à la paroi de fond (58) et s'étendant transversalement dans une direction transversale (Y) entre deux parois latérales (74) fixées aux parois latérales (60) du berceau (8).

4. Berceau (8) selon la revendication 1 ou 2, **caractérisé en ce qu'**il comprend au moins un logement (56A, 56B) comportant une nervure verticale (66) avec un bord supérieur concave adapté pour accueillir la bride de fixation du palier (16A, 16B), la nervure verticale (66) s'étendant verticalement à partir de la paroi de fond (58) et transversalement selon une direction transversale (Y) entre les parois latérales (60).

5. Berceau (8) selon la revendication 4, **caractérisé en ce qu'**au moins un logement (56A, 56B) comprend des nervures obliques (70) s'étendant selon la direction longitudinale (X) d'un côté ou de part et d'autre de la nervure verticale (66), et de manière oblique par rapport aux directions transversale (Y) et verticale (Z) entre la paroi de fond (58) et les parois latérales (60).

6. Berceau (8) selon l'une quelconque des revendications précédentes, **caractérisé en ce que** le cadre (36) comporte quatre flancs additionnels (52), et est en forme d'un octogone selon une section suivant un plan perpendiculaire à la direction verticale (Z).

7. Berceau (8) selon l'une quelconque des revendications précédentes, **caractérisé en ce que** le cadre (36) comporte en outre des nervures de renfort verticales (64) s'étendant selon la direction verticale (Z) entre le bord inférieur (46) et le bord supérieur(48).

8. Système de transmission (2) comprenant
- une machine électrique (6) comportant un stator (10), un arbre de transmission (14), un rotor (12) solidaire de l'arbre (14), et deux paliers (16A ; 16B) du type à fixation par bride et de soutien de l'arbre de transmission (14), et
- un berceau (8) propre à recevoir ladite machine (6),
**caractérisé en ce que** le berceau (8) est conforme à l'une quelconque des revendications précédentes.

## Patentansprüche

1. Halterung (8) für eine elektrische Maschine (6), wobei die elektrische Maschine (6) einen Stator (10), eine Übertragungswelle (14), einen Rotor (12), der mit der Welle (14) fest verbunden ist, und zwei Lager (16A; 16B) des flanschbefestigten Typs zum Halten der Übertragungswelle (14) umfasst,
wobei die Halterung (8) einen Rahmen (36) umfasst, der einen Sitz zur Aufnahme eines Teils der Maschine (6) begrenzt, wobei sich der Rahmen (36) in einer vertikalen Richtung (Z) erstreckt und einen unteren Rand (46) und einen oberen Rand (48) aufweist, wobei der untere Rand (46) dafür bestimmt ist, mit einer Auflage (4) verbunden zu werden, wobei der obere Rand (48) einen oder zwei Aufnahmesitze (56A; 56B) umfasst, wobei jeder Aufnahmesitz (56A; 56B) dafür geeignet ist, ein jeweiliges Lager (16A; 16B) aufzunehmen und eine Bodenwand (58) und zwei Seitenwände (60) aufweist, wobei die Höhe der oder jeder Seitenwand (60) in vertikaler Richtung (Z) wenigstens gleich einem Fünftel der Höhe des Rahmens (36) in vertikaler Richtung (Z), vorzugsweise wenigstens gleich einem Viertel der Höhe des Rahmens (36) in vertikaler Richtung (Z) ist,
**dadurch gekennzeichnet, dass** jedes Lager (16A, 16B) durch eine Befestigung verbunden ist, die in einen Aufnahmesitz (56A, 56B) eingebettet ist, und der Rahmen (36) zwei Längsflanken (50), die sich im Wesentlichen in einer Längsrichtung (X) erstrecken, und zwei Querflanken (54) aufweist, die sich im Wesentlichen in einer Querrichtung (Y) erstrecken und mit den Längsflanken (50) mechanisch verbunden sind, und dass der Rahmen (36) ferner wenigstens eine zusätzliche Flanke (52) aufweist, die zwischen einer Längsflanke (50) und einer jeweiligen Querflanke (54) gebildet ist und sich schräg in Bezug auf die Längs- (X) und Querrichtung (Y) erstreckt.

2. Halterung nach Anspruch 1, **dadurch gekennzeichnet, dass** sie für wenigstens einen Aufnahmesitz (56A; 56B) zwei Seitenwände (60) umfasst, die in Bezug auf den oberen Rand (48) des Rahmens (36) in vertikaler Richtung (Z) vorragen.

3. Halterung nach einem der Ansprüche 1 und 2, **dadurch gekennzeichnet, dass** sie ferner wenigstens einen abnehmbaren Lagerbock (15A, 15B) umfasst, der in dem Sitz (56A, 56B) befestigt ist und auf dem das Lager (16A, 16B) befestigt ist, wobei der Lagerbock dafür eingerichtet ist, die Steifigkeit der Lager (16A, 16B) in axialer Richtung (X) zu erhöhen und den Rotor (12) in der elektrischen Maschine (6) in axialer Richtung (X) ohne Kollision mit der Halterung (8) zu demontieren oder zu montieren, und dass der Lagerbock (15A, 15B) ferner wenigstens eine vertikale Rippe (72) mit einem konkaven oberen Rand aufweist, der imstande ist, den Befestigungsflansch des Lagers (16A, 16B) aufzunehmen, wobei die vertikale Rippe an der Bodenwand (58) anliegt oder befestigt ist und sich quer in einer Querrichtung (Y) zwischen zwei Seitenwänden (74) erstreckt, die an den Seitenwänden (60) der Halterung (8) befestigt sind.

4. Halterung (8) nach Anspruch 1 oder 2, **dadurch gekennzeichnet, dass** sie wenigstens einen Sitz (56A, 56B) umfasst, der eine vertikale Rippe (66) mit einem konkaven oberen Rand aufweist, der dafür eingerichtet ist, den Befestigungsflansch des Lagers (16A, 16B) aufzunehmen, wobei sich die vertikale Rippe (66) vertikal ausgehend von der Bodenwand (58) und quer in einer Querrichtung (Y) zwischen den Seitenwänden (60) erstreckt.

5. Halterung (8) nach Anspruch 4, **dadurch gekennzeichnet, dass** wenigstens ein Sitz (56A, 56B) schräge Rippen (70) umfasst, die sich in Längsrichtung (X) von einer Seite oder von beiden Seiten der vertikalen Rippe (66) und schräg in Bezug auf die Querrichtung (Y) und die vertikale Richtung (Z) zwischen der Bodenwand (58) und den Seitenwänden (60) erstrecken.

6. Halterung (8) nach einem der vorhergehenden Ansprüche, **dadurch gekennzeichnet, dass** der Rahmen (36) vier zusätzliche Flanken (52) aufweist und in einem Schnitt entlang einer Ebene senkrecht zu der vertikalen Richtung (Z) die Form eines Achtecks hat.

7. Halterung (8) nach einem der vorhergehenden Ansprüche, **dadurch gekennzeichnet, dass** der Rahmen (36) ferner vertikale Verstärkungsrippen (64) aufweist, die sich in vertikaler Richtung (Z) zwischen dem unteren Rand (46) und dem oberen Rand (48) erstrecken.

8. Übertragungssystem (2), umfassend
- eine elektrische Maschine (6), aufweisend einen Stator (10), eine Übertragungswelle (14), einen Rotor (12), der mit der Welle (14) fest verbunden ist, und zwei Lager (16A; 16B) des flanschbefestigten Typs zum Halten der Übertragungswelle (14), und
- eine Halterung (8), die dafür geeignet ist, die Maschine (6) aufzunehmen,
**dadurch gekennzeichnet, dass** die Halterung (8) einem der vorhergehenden Ansprüche entspricht.

## Claims

1. Cradle (8) for an electric machine (6), the electric machine (6) comprising a stator (10), a transmission shaft (14), a rotor (12) connected to the shaft (14), and two bearings (16A; 16B) of the flange-mounted type for supporting the transmission shaft (14),
the cradle (8) comprising a frame (36) delimiting a seat for receiving part of the machine (6), the frame (36) extending in a vertical direction (Z) and comprising a lower edge (46) and an upper edge (48), the lower edge (46) being intended for connection to a support (4), the upper edge (48) comprising one or two receiving seats (56A; 56B), each receiving seat (56A; 56B) being able to receive a respective bearing (16A; 16B) and comprising a base wall (58) and two side walls (60), the height of the or each side wall (60) in the vertical direction (Z) being at least equal to a fifth of the height of the frame (36) in the vertical direction (Z), preferably at least equal to a quarter of the height of the frame (36) in the vertical direction (Z), **characterized in that** each bearing (16A, 16B) is linked by a mounting recessed within a receiving seat (56A, 56B) and the frame (36) comprises two longitudinal flanks (50) extending substantially in a longitudinal direction (X), two transverse flanks (54) extending substantially in a transverse direction (Y) and mechanically connected to the longitudinal flanks (50), and **in that** the frame (36) also comprises at least one additional flank (52) arranged between a longitudinal flank (50) and a respective transverse flank (54) and extending obliquely with respect to the longitudinal (X) and transverse (Y) directions.

2. Cradle according to Claim 1, **characterized in that** it comprises, for at least one receiving seat (56A; 56B), two side walls (60) protruding with respect to the upper edge (48) of the frame (36) in the vertical direction (Z) .

3. Cradle according to either of Claims 1 and 2, **characterized in that** it also comprises at least one removable bearing support (15A, 15B), which is fixed in the seat (56A, 56B) and on which the bearing (16A, 16B) is fixed, said bearing support being suitable for increasing the rigidity of the bearings (16A, 16B) in the axial direction (X) and for disassembling or assembling the rotor (12) in the electric machine (6) in the axial direction (X) without contact with the cradle (8), and **in that** the bearing support (15A, 15B) also comprises at least one vertical rib (72) having a concave upper edge able to receive the mounting flange of the bearing (16A, 16B), the vertical rib being in abutment against or fixed to the base wall (58) and extending transversely in a transverse direction (Y) between two side walls (74) fixed to the side walls (60) of the cradle (8).

4. Cradle (8) according to Claim 1 or 2, **characterized in that** it comprises at least one seat (56A, 56B) comprising a vertical rib (66) having a concave upper edge suitable for receiving the mounting flange of the bearing (16A, 16B), the vertical rib (66) extending vertically from the base wall (58) and transversely in a transverse direction (Y) between the side walls (60).

5. Cradle (8) according to Claim 4, **characterized in that** at least one seat (56A, 56B) comprises oblique ribs (70) extending in the longitudinal direction (X) from one side or from either side of the vertical rib (66), and obliquely with respect to the transverse (Y) and vertical (Z) directions between the base wall (58) and the side walls (60).

6. Cradle (8) according to any one of the preceding claims, **characterized in that** the frame (36) comprises four additional flanks (52) and is octagonal in a section in a plane perpendicular to the vertical direction (Z).

7. Cradle (8) according to any one of the preceding claims, **characterized in that** the frame (36) also comprises vertical reinforcement ribs (64) extending in the vertical direction (Z) between the lower edge (46) and the upper edge (48) .

8. Transmission system (2) comprising
- an electric machine (6) comprising a stator (10), a transmission shaft (14), a rotor (12) connected to the shaft (14), and two bearings (16A; 16B) of the flange-mounted type for supporting the transmission shaft (14), and
- a cradle (8) able to receive said machine (6), **characterized in that** the cradle (8) is according to any one of the preceding claims.
